# EUROPÄISCHE PATENTANMELDUNG

(11) **EP 0 559 112 A2**
(43) Veröffentlichungstag der Anmeldung: **08.09.1993**
(21) Anmeldenummer: 93103191.8
(22) Anmeldetag: 27.02.1993
(51) Int. Cl.: G01L 3/24, G01L 23/18

(54) **Verfahren und Vorrichtung zur Leistungsmessung von Kolbenbrennkraftmaschinen**

(30) Priorität: 03.03.1992 DE 4206592
(71) Anmelder: Nowak, Klaus Dipl.-Ing., D-22455 Hamburg (DE)
(72) Erfinder: Nowak, Klaus Dipl.-Ing., D-22455 Hamburg (DE)
(74) Vertreter: Schmidt-Bogatzky, Jürgen, Dr.-Ing. Huth, Dietrich & Partner

(57) **Zusammenfassung**

Die Erfindung betrifft ein Verfahren zur Leistungsmessung an Kolbenbrennkraftmaschinen, insbesondere mehrzylindrigen Großdieselmotoren, und eine Vorrichtung zu dessen Durchführung. Im Bereich des Masseschwerpunktes bzw. der Mitte des freien Teiles mindestens eines Zylinderdeckelbolzens eines jeden Zylinders des Motors wird die Dehnung gemessen und hieraus der Brennraumdruck ermittelt. Unter Berücksichtigung der jeweiligen Stellung der Kurbelwelle kann dann die Motorleistung ermittelt werden.

## Beschreibung

Die Erfindung betrifft ein Verfahren zur Leistungsmessung von Kolbenbrennkraftmaschinen, insbesondere mehrzylindrigen Großdieselmotoren, bei dem mittels als Dehnungsmeßstreifen ausgebildeter Druckgeber durch eine elektronische Auswerteschaltung der Brennraumdruck und aus diesem unter Berücksichtigung der jeweiligen Stellung der Kurbelwelle die Motorleistung ermittelt wird, und eine Vorrichtung zur Durchführung des Verfahrens.

Zur Leistungsmessung eines Motors kann dessen Arbeitsprozeß aus dem Druckverlauf in den Zylindern bestimmt werden. Hierzu ist es bekannt, den Druck in den Brennräumen eines Motors über Indikatorventile zu messen, die am Zylinderkopf angeordnet werden. Die zur Aufnahme eines Arbeitsdiagramms erforderlichen Druckaufnehmer sind jedoch sehr hohen thermischen und mechanischen Beanspruchungen ausgesetzt, so daß ihre Lebensdauer nur begrenzt ist. Außerdem besteht stets die Gefahr, daß sich Rückstände aufgrund der Verbrennungsvorgänge in den Meßkanälen ablagern, so daß diese hierdurch verschlossen werden können. Es ist deshalb erforderlich, Meßkanäle und Druckaufnehmer regelmäßig zu warten, was sehr kostenintensiv ist. In der DE-B-1 202 530 wird zur Vermeidung dieser Nachteile vorgeschlagen, zur Indizierung der Zylinderleistung einer Kolbenbrennkraftmaschine ein elektronisches Druckmeßgerät zu verwenden, dessen Druckgeber ein induktiver Geber, ein Dehnungsmeßstreifen oder ein piezoelektrischer Geber sein kann. Dieser Druckgeber soll den Zylinderdruck in eine seinem Augenblickswert analoge Größe umwandeln, die dann weiter verarbeitet wird. Es ist nicht angegeben, wo die Druckgeber angeordnet werden sollen. Nach der GB-A-1 593 685 ist es bekannt, zur Leistungsmessung von Kolbenbrennkraftmaschinen jedem Zylinder einen piezoelektrischen Meßwertumformer zuzuordnen. Die genaue Anordnung wird nicht beschrieben. Es hat sich gezeigt, daß mit den bekannten Meßanordnungen keine einwandfreien Leistungsmessungen möglich sind, da die motorenspezifischen Störeinflüsse nicht berücksichtigt werden. So wirken beispielsweise von außen Kräfte auf das Zylinderdeckelsystem ein. Insbesondere wirken sich Druckschwankungen im Abgassystem über den an die Zylinder angeflanschten Abgaskanal aus.

Die Aufgabe der Erfindung besteht darin, das Verfahren der eingangs genannten Art und die zu dessen Durchführung dienende Vorrichtung so zu verbessern, daß bei Vermeidung von Störeinflüssen durch mechanische Einwirkungen eine sichere und wartungsfreie Leistungsmessung möglich ist.

Erfindungsgemäß erfolgt die Lösung der Aufgabe bezüglich des Verfahrens durch die kennzeichnenden Merkmale des Anspruchs 1 und bezüglich der Vorrichtung zur Durchführung des Verfahrens durch die kennzeichnenden Merkmale des Anspruchs 3. Vorteilhafte Ausgestaltungen der Erfindung werden in den abhängigen Ansprüchen beschrieben.

Nach der Erfindung erfolgt die Druckmessung durch mindestens zwei Dehnungsmeßstreifen, die an mindestens einem Zylinderdeckelbolzen im Bereich von dessen Masseschwerpunkt bzw. der Mitte des freien Teils des Zylinderdeckelbolzens angebracht sind. Jede Druckänderung im Brennraum des Zylinders bedeutet auch eine Änderung des Zugkräfte in dem Zylinderdeckelbolzen. Diese Veränderungen werden durch die Dehnungsmeßstreifen in einem elektrischen System erfaßt und verarbeitet. Zwischen dem Brennraumdruck und dem über die Dehnungsmeßstreifen gewonnenen elektrischen Signal besteht Linearität. Ein weiterer Vorteil besteht darin, daß die Dehnungsmeßstreifen eine sichere und völlig wartungsfreie Signalaufnahme ermöglichen und im Vergleich zu bekannten Druckaufnehmern sehr preiswert sind. Der Aufbau der Vorrichtung zur Leistungsmessung kann dezentralisiert erfolgen, wobei vorteilhaft die Meßsignale der Dehnungsmeßstreifen zunächst einer Meßwertauswerteeinheit am Motor zugeführt werden, die mit einer zentralen Rechnereinheit in Verbindung steht. Durch Anordnung der Meßwertauswerteeinheit am Motor wird der Kabelaufwand vermindert und die Störsicherheit erhöht. Äußere Störeinflüsse werden eliminiert. Bei Betrieb einer Kolbenbrennkraftmaschine schwingen die freien Teile der Zylinderdeckelbolzen. Hierdurch auftretende Meßwertstörungen werden dadurch vermieden, daß mindestens zwei Dehnungsmeßstreifen in einer Ebene einander gegenüberliegend am Zylinderdeckelbolzen angebracht werden. Es können auch mehrere Dehnungsmeßstreifen angeordnet werden, wobei lediglich die Symmetrie gewahrt bleiben muß. Die Dehnungsmeßstreifen werden elektrisch in Reihe geschaltet, da sich dann Störeinflüsse addieren und in ihrer Gesamtheit aufheben, wodurch fehlerfreie Messungen erzielt werden. In Fällen, in denen von außen störende Kräfte auf das Zylinderdeckelsystem einwirken, können über den Umfang der Zylinderdeckel mehrere, mindestens zwei, Zylinderdeckelbolzen mit Dehnungsmeßstreifen versehen werden. Hierdurch können die Einflüsse von Druckschwankungen im Abgassystem aufgehoben werden da diese sich in den Zylinderdeckelbolzen als Biegemomente auswirken. Wird z. B. auf der Abgasseite ein Zylinderdeckelbolzen gedehnt, wird der auf der Steuerseite gegenüberliegende Zylinderdeckelbolzen gestaucht. Diese Störgrößen können dadurch beseitigt werden, daß mindestens zwei einander gegenüberliegende Zylinderdeckelbolzen in der beschriebenen Weise mit Dehnungsmeßstreifen bestückt werden. Werden mehr als zwei Zylinderdeckelbolzen eines Zylinderdeckels mit Dehnungsmeßstreifen versehen, müssen diese Zylinderdeckelbolzen um den Zylinderdeckel symmetrisch angeordnet werden.

Die Erfindung wird nachstehend am Beispiel der in der Zeichnung schematisch dargestellten Vorrichtung näher erläutert. Es zeigt:

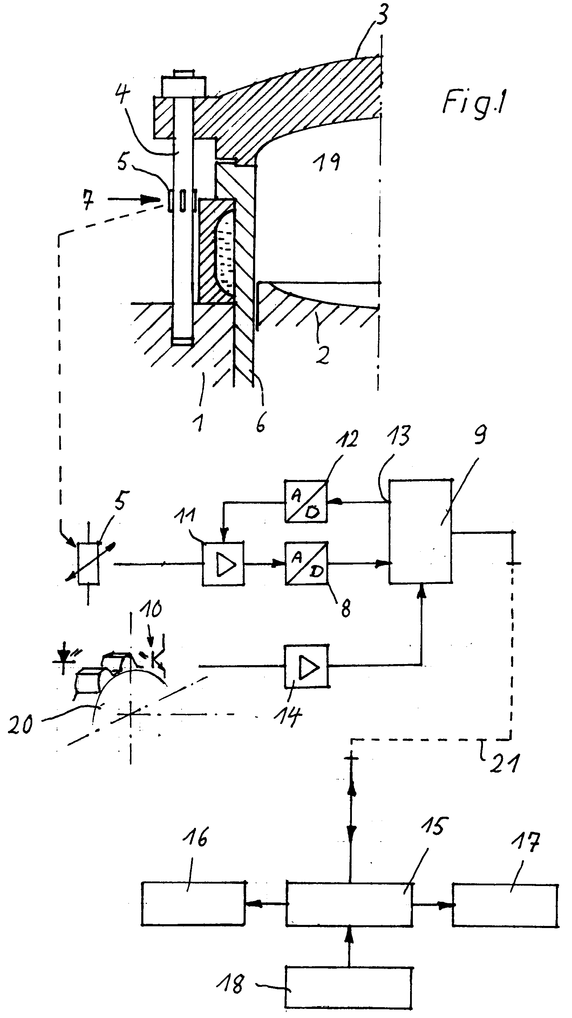

- Fig. 1: einen Zylinderdeckel mit Zylinderdeckelbolzen mit Dehnungsmeßstreifen in einer schematischen Seitenansicht sowie die mit den Dehnungsmeßstreifen verbundene Schaltung zur Meßwertaufnahme und -verarbeitung als Blockschaltbild,
- Fig. 2: ein mit der Vorrichtung ermitteltes Arbeitsdiagramm.

Durch den Zylinderdeckelbolzen 4 ist in bekannter Weise der Zylinderdeckel 3 auf eine Zylinderbuchse 6 gepreßt, die in einem Zylinder 1 der Kolbenbrennkraftmaschine angeordnet ist. Zwischen dem Kolben 2 in der Zylinderbuchse 6 und dem Zylinderdeckel 3 ist der Brennraum 19 ausgebildet.

Im Bereich des Masseschwerpunkts 7 bzw. der Mitte des freien Teils des Zylinderdeckelbolzens sind in einer Ebene jeweils um 90° zueinander versetzt elektrisch in Reihe geschaltet Dehnungsmeßstreifen 5 mit dem Zylinderdeckelbolzen 4 verbunden. Die Dehnungsmeßstreifen 5 sind über einen Verstärker 11 und einen Analog/Digital-Wandler 8 mit einer Meßwertauswerteeinheit 9 verbunden. Diese weist einen Ausgang 13 auf, an dem ein Digital/Analog-Wandler 12 angeschlossen ist, der mit dem Verstärker 11 verbunden ist. An der Kurbelwelle 20 ist ein Signalgeber 10 zur Ermittlung der jeweiligen Kurbelwellenstellung angeordnet, der über einen Trigger 14 mit der Meßwertauswerteeinheit 9 verbunden ist.

Die Meßwertauswerteeinheit 9 ist über eine Signalleitung 21 mit einer Rechnereinheit 15 verbunden, die mittels einer Tastatur 18 bedient werden kann. An die Rechnereinheit 15 sind als Peripheriegeräte ein Drucker 16 und ein Monitor 17 angeschlossen.

In der Meßwertauswerteeinheit 9 werden die Momentandrücke im Brennraum 19 erfaßt und unter Auswertung der Impulse des Triggers 14 der jeweiligen Position der Kurbelwelle 20 zugeordnet. Hierdurch werden alle für eine Leistungsberechnung erforderlichen Daten ermittelt. Die endgültige Datenverarbeitung für den gesamten Motor wird von der Rechnereinheit 15 übernommen, wobei die ermittelten Daten über den Monitor 17 optisch angezeigt und/oder durch den Drucker 16 ausgedruckt werden können. Der Betreiber des Motors hat somit eine aktuelle Übersicht über die Motorleistung.

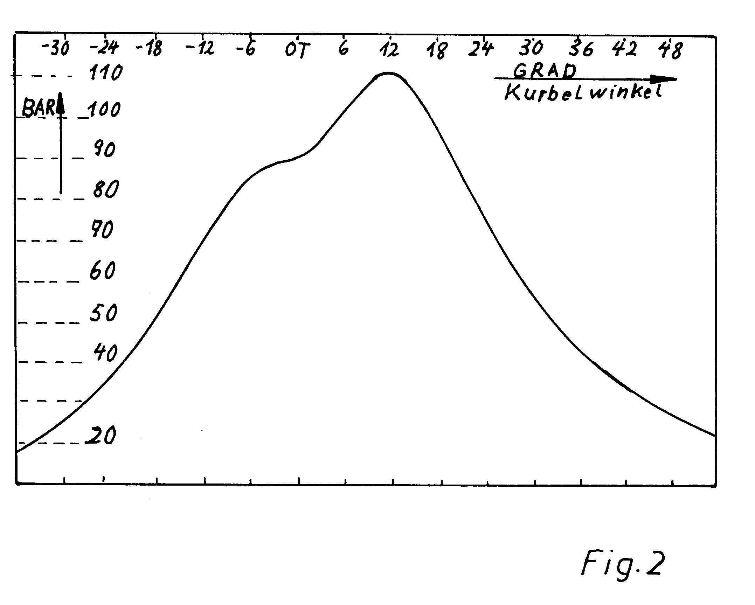

Ein Beispiel für ein ermitteltes Arbeitsdiagramm ist in Fig. 2 dargestellt.

## Patentansprüche

1. Verfahren zur Leistungsmessung von Kolbenbrennkraftmaschinen, insbesondere mehrzylindrigen Großdieselmotoren, bei dem mittels als Dehnungsmeßstreifen ausgebildeter Druckgeber durch eine elektronische Auswerteschaltung der Brennraumdruck und aus diesem unter Berücksichtigung der jeweiligen Stellung der Kurbelwelle die Motorleistung ermittelt wird, dadurch gekennzeichnet, daß im Bereich des Masseschwerpunktes mindestens eines Zylinderdeckelbolzens eines jeden Zylinders mit mindestens zwei in einer Ebene einander gegenüberliegend am Zylinderdeckelbolzen angebrachten Dehnungsmeßstreifen die Dehnung gemessen wird.

2. Verfahren nach Anspruch 1, dadurch gekennzeichnet, daß die Dehnung mit Dehnungsmeßstreifen gemessen wird, die in der Mitte des freien Teils des Zylinderdeckelbolzens angebracht sind.

3. Vorrichtung zur Durchführung des Verfahrens nach den Ansprüchen 1 und 2, bei der als Druckgeber für eine elektronische Auswerteschaltung jedem Zylinder (1) mindestens zwei Dehnungsmeßstreifen (5) zugeordnet sind, dadurch gekennzeichnet, daß an mindestens einem Zylinderdeckelbolzen (4) eines jeden Zylinders (1) des Motors im Bereich des Masseschwerpunktes (7) des Zylinderdeckelbolzens (4) mindestens zwei Dehnungsmeßstreifen (5) in einer Ebene einander gegenüberliegend angeordnet ist, die über einen Analog/Digital-Wandler (8) mit einer Meßwertauswerteeinheit (9) verbunden ist, die mit einem Signalgeber (10) zur Ermittlung der Stellung der Kurbelwelle (20) verbunden ist.

4. Vorrichtung nach Anspruch 3, dadurch gekennzeichnet, daß die Dehnungsmeßstreifen (5) in der Mitte des freien Teils des Zylinderdeckelbolzens (4) angeordnet sind.

5. Vorrichtung nach Anspruch 3 und 4, dadurch gekennzeichnet, daß auf dem Zylinderdeckelbolzen (4) in einer Ebene jeweils um 90° versetzt ein Dehnungsmeßstreifen (5) angeordnet ist.

6. Vorrichtung nach Anspruch 3 und 4, dadurch gekennzeichnet, daß über den Umfang des Zylinderdeckelbolzens (1) symmetrisch zueinander mehr als zwei Paare von Dehnungsmeßstreifen (5) angeordnet sind.

7. Vorrichtung nach einem der Ansprüche 3 bis 6, dadurch gekennzeichnet, daß die Dehnungsmeßstreifen (5) an einem an der Abgasauslaßseite und an einem an der Steuerseite der Zylinder (1) angeordneten Zylinderdeckelbolzen (4) ausgebildet sind.

8. Vorrichtung nach einem der Ansprüche 3 bis 6, dadurch gekennzeichnet, daß symmetrisch über den Umfang des Zylinderdeckels (3) verteilt Zylinderdeckelbolzen (4) mit Dehnungsmeßstreifen (5) angeordnet sind.

9. Vorrichtung nach Anspruch 3 bis 8, dadurch gekennzeichnet, daß die Dehnungsmeßstreifen (5) eines Zylinderdeckelbolzens (4) elektrisch in Reihe geschaltet sind.

10. Vorrichtung nach Anspruch 3, dadurch gekennzeichnet, daß vor dem Eingang des Analog/Digitalwandlers (8) ein Verstärker (11) angeordnet ist.

11. Vorrichtung nach Anspruch 10, dadurch gekennzeichnet, daß der Verstärker (11) über einen Digital/Analog-Wandler (12) mit einem Ausgang (13) der Meßwertauswerteeinheit (9) verbunden ist.

12. Vorrichtung nach Anspruch 3, dadurch gekennzeichnet, daß der Signalgeber (10) für die Kurbelwellenstellung über einen Trigger (14) mit der Meßwertauswerteeinheit (9) verbunden ist.

13. Vorrichtung nach Anspruch 3, dadurch gekennzeichnet, daß an die Meßwertauswerteeinheit (9) eine Rechnereinheit (15) mit Peripheriegeräten angeschlossen ist.
